# EUROPÄISCHE PATENTSCHRIFT

(11) **EP 3 040 176 B1**
(45) Veröffentlichungstag und Bekanntmachung des Hinweises auf die Patenterteilung: **04.11.2020**
(21) Anmeldenummer: 15197503.4
(22) Anmeldetag: 02.12.2015
(51) Int. Cl.: B29C 44/42, B29C 33/20, B29C 44/12, B29C 44/58, B29C 31/00, B29C 33/34, B29L 31/30, B29K 75/00, B29C 44/36, B29C 44/60

(54) **FERTIGUNGSANLAGE**
MANUFACTURING PLANT
INSTALLATION DE FABRICATION

(30) Priorität: 19.12.2014 DE 202014106196 U
(43) Veröffentlichungstag der Anmeldung: 06.07.2016
(73) Patentinhaber: Josef Weischer GmbH & Co. KG, 48282 Emsdetten (DE)
(72) Erfinder: HUNE, Rupert, 49090 Osnabrück (DE)
(74) Vertreter: Bossmeyer, Jörg Peter

(56) Entgegenhaltungen:
- EP-A2- 2 153 968
- WO-A1-2008/104878
- DE-A1- 1 629 746
- DE-A1- 19 901 114
- DE-A1-102005 003 074

## Beschreibung

Die Erfindung betrifft eine Fertigungsanlage zur Herstellung eines Bauteils, das aus einer Formhaut, einem Träger und einer zwischen der Formhaut und dem Träger angeordneten Schaumstoffschicht besteht.

Bauteile, die aus einer Formhaut, einem Träger und einer zwischen der Formhaut und dem Träger angeordneten Schaumstoffschicht bestehen, können beispielsweise als Armaturenbrett eines Kraftfahrzeuges zum Einsatz kommen. Bislang werden zur Herstellung eines derartigen Bauteils extrem aufwändige Fertigungsanlagen eingesetzt, die aus einer Vielzahl kostenintensiver Werkzeugmaschinen bestehen. Dennoch ist es bisher nicht gelungen, entstehende Wartezeiten fertigungstechnisch sinnvoll auszufüllen beziehungsweise derartige Wartezeiten zu vermeiden. Die Wartezeiten sind erforderlich, um den ursprünglich flüssigen und in die Formhaut eingespritzten Schaumstoff aushärten zu lassen, so dass sich der Träger und die Formhaut über die Schaumstoffschicht stoffschlüssig miteinander verbinden können. Bei der Aushärtung reagieren Polyol und Isocyanat zu Polyurethan. Selbst der Einsatz von Rundtischen hat hier bislang keinen wesentlichen Fortschritt gebracht, da bisher auch in diesem Fall Stillstandszeiten entstehen, beispielsweise durch den Umstand, dass einzelne Werkzeuge zeitweilig nicht genutzt werden oder bei erforderlichen Werkzeugwechseln. Darüber hinaus ist festzustellen, dass in bekannten Fertigungsanlagen eine Vielzahl einzelner Arbeitskräfte erforderlich sind, um die komplexen Arbeitsschritte zur Herstellung der genannten Bauteile durchführen zu können beziehungsweise diese vorzubereiten. Durch die entstehenden Wartezeiten sind auch diese Arbeitskräfte nicht vollständig ausgelastet. Insgesamt stellt sich die Fertigung derartiger Bauteile demnach bislang recht unbefriedigend, zu langsam und wegen der kostenintensiven Werkzeugmaschinen wenig rentabel dar.

So geht beispielsweise aus der DE 10 2005 003 074 A1 eine Fertigungsanlage, geeignet zur Herstellung eines Spritzgussbauteils hervor, bei der mehrere, im Aufbau gleiche Werkzeuge zum Einsatz kommen, die jeweils aus einem Unterwerkzeug und einem lösbar mit dem Unterwerkzeug verbundenen Oberwerkzeug bestehen. Jedes Werkzeug ist zum Verschließen mit einer Verriegelungseinrichtung ausgestattet und wenigstens ein durch ein Programm gesteuerter Roboter verfügt über mindestens einen Roboterarm zur Bewegung des gesamten Werkzeugs. Durch den Roboter kann das Werkzeug zwischen einer Spritzposition und einer Parkposition bewegt werden.

Aus der DE 16 29 746 A1 und aus der WO 2008 / 104 878 A1 ist es ferner bekannt, einen Rundtisch einzusetzen, um einen kontinuierlichen Fertigungsprozess zu erreichen. Die DE 199 01 114 A1 beschreibt hingegen eine Karussellausfertigung zur Umsetzung eines kontinuierlichen Fertigungsprozesses einer Spritzpressmaschine.

Der Erfindung liegt die Aufgabe zugrunde, eine insgesamt vereinfachte Fertigungsanlage bereitzustellen, die möglichst ohne Unterbrechungen kontinuierlich und möglichst weitgehend automatisiert die Fertigung von Bauteilen erlaubt, die aus einem Träger, einer Formhaut und einer zwischen Träger und Formhaut vorhandenen Schaumstoffschicht bestehen.

Die Erfindung löst diese Aufgabenstellung mit den Merkmalen des Anspruches 1.

Eine erfindungsgemäße Fertigungsanlage zur Herstellung eines Bauteils mittels einer stoffschlüssigen Verbindung zwischen einem Träger, einer Formhaut und einer zwischen Träger und Formhaut angeordneten Schaumstoffschicht, weist folgende Merkmale auf:
- mehrere, im Aufbau gleiche oder gleichartige Werkzeuge,
- jedes der Werkzeuge besteht aus einem Unterwerkzeug und einem lösbar und/oder um eine Drehachse schwenkbar mit dem Unterwerkzeug verbundenen Oberwerkzeug,
- das Oberwerkzeug ist dabei jeweils zur Aufnahme eines Trägers und das Unterwerkzeug zur Einbringung einer Formhaut geeignet, wobei auf die Formhaut eine ursprünglich flüssige, selbstaushärtende Schaumstoffschicht aufgebracht ist und Träger, Formhaut und Schaumstoffschicht durch Schließen des Werkzeugs miteinander verbindbar sind,
- jedes Werkzeug ist zum Verschließen mit einer Verriegelungseinrichtung ausgestattet,
- wenigstens ein durch ein Programm gesteuerter Roboter verfügt über mindestens einen Roboterarm zur Bewegung des gesamten Werkzeugs,
- ein drehbarer Rundtisch, der durch den Roboter in einer Bestückungsposition mit einem mit der Formhaut ausgestatteten Unterwerkzeug bestückbar ist,
- eine Spritzposition des Rundtisches, zum Auftrag der Schaumstoffschicht auf die Formhaut,
- das Unterwerkzeug ist in einer Verbindungsposition des Rundtisches mit einem den Träger enthaltenden Oberwerkzeug verbind- und verschließbar,
- das gesamte, durch den Roboter geschlossene Werkzeug ist wechselnd zwischen dem Rundtisch und einer Parkposition bewegbar, wozu außenseitig an dem Oberwerkzeug ein Werkzeugflansch angeordnet ist.

Die Vorteile der Erfindung bestehen insbesondere in der sehr kompakten, auf einen engen Raum begrenzbaren Ausführung einer derartigen Fertigungsanlage, die zudem aus nur wenigen Einrichtungen besteht und nicht mehr zahlreiche Werkzeugmaschinen erfordert. Genutzt wird hierbei insbesondere das Prinzip der "kurzen Wege". Ein wesentlicher, erfindungsgemäßer Aspekt besteht darin, dass mindestens ein programmgesteuerter Roboter zum Einsatz kommt, der zur Bewegung des gesamten Werkzeugs in unterschiedlichsten Bewegungsrichtungen genutzt wird und darüber hinaus auch die einzelnen Werkzeuge öffnet beziehungsweise schließt. Dabei ist es möglich, das Oberwerkzeug und das Unterwerkzeug mittels des Roboters in jeder Bewegungsrichtung voneinander zu trennen oder miteinander zu verbinden und/oder um eine Drehachse schwenkbar miteinander zu verbinden. Eine Kombination aus lösbarer Verbindung und Schwenkbarkeit um eine zumindest virtuelle Drehachse liegt ebenfalls im Erfindungsbereich. Da bei jedem der zum Einsatz kommenden Werkzeuge das Unterwerkzeug und das Oberwerkzeug lösbar miteinander verbunden sind, kann dadurch erreicht werden, dass keine Stillstandszeiten entstehen. Die Unterwerkzeuge beziehungsweise Oberwerkzeuge können auf diese Weise nämlich unabhängig voneinander bestückt und beliebig miteinander verbunden werden. Die zur Aushärtung der Schaumstoffschicht erforderliche Wartezeit wird in sinnfälliger Weise dadurch genutzt, dass der Roboter das geschlossene Werkzeug für die Zeit der Aushärtung in eine Parkposition verbringt. Da der Werkzeugwechsel nicht mehr auf einem Rundtisch durchgeführt, sondern die Parkposition zur "Zwischenlagerung" genutzt wird, entstehen im Bereich des Rundtisches ebenfalls keine Wartezeiten mehr, wie dies bisher der Fall war. Somit werden durch die erfindungsgemäße Fertigungsanlage die Arbeitsabläufe insgesamt vereinfacht und die einzelnen Stationen in sinnvoller Weise miteinander verbunden, so dass eine Prozessoptimierung möglich wird. Die genannten Vorteile lassen sich insbesondere erreichen, weil außenseitig an dem Oberwerkzeug ein Werkzeugflansch angeordnet ist, der das Ergreifen des gesamten Oberwerkzeuges sowie des gesamten, geschlossenen Werkzeugs mit einem Roboterarm ermöglicht, so dass das Werkzeug durch den Roboter geöffnet und geschlossen sowie insgesamt zwischen verschiedenen Positionen innerhalb der Fertigungsanlage hin- und herbewegt werden kann.

Weitere Ausgestaltungen der Erfindung sind Gegenstand der Unteransprüche.

So entspricht es einer ersten Ausgestaltung der Erfindung, dass der Rundtisch lediglich zwei oder drei Bearbeitungspositionen aufweist. Der Rundtisch ist damit insgesamt sehr einfach aufgebaut und ermöglicht es dennoch, sämtliche Bearbeitungsstationen, die für die Fertigung des aus einem Träger, einer Formhaut und einer zwischen Träger und Formhaut angeordneter Schaumstoffschicht bestehenden Bauteils erforderlich sind, vorzusehen. Diese Gestaltung des Rundtisches ist ein nicht unwesentlicher Aspekt der kompakten Ausführung der Fertigungsanlage.

Für die Umsetzung der zur Aushärtung der Schaumstoffschicht erforderlichen Wartezeiten ist es vorteilhaft, wenn innerhalb eines Werkzeugmagazins der Fertigungsanlage mehrere Parkpositionen vorhanden sind. Auf diese Weise können die geschlossenen Werkzeuge, die mit der Formhaut, dem Träger und der Schaumstoffschicht versehen sind, in das Werkzeugmagazin verbracht werden, um dort in der Parkposition zu verbleiben, bis die Schaumstoffschicht vollständig ausgehärtet und damit das Bauteil fertig gestellt ist. Das damit erzeugte Bauteil kann anschließend aus dem Werkzeug entnommen werden.

Ein weiterer Vorzug des Werkzeugmagazins mit den vorhandenen Parkpositionen besteht darin, dass mindestens eine der Parkpositionen für einen Werkzeugwechsel nutzbar ist. Im laufenden Fertigungsprozess kann es immer wieder vorkommen, dass einzelne Werkzeuge ausgetauscht werden müssen. Hierfür ist eine zusätzliche Parkposition innerhalb des Werkzeugmagazins hilfreich. Um zu gewährleisten, dass kein Stillstand in der Fertigung erforderlich wird, muss daher eine zusätzliche Parkposition in dem Werkzeugmagazin vorgehalten werden, um diese Parkposition für den erwähnten Werkzeugwechsel nutzen zu können. Die Mindestgröße des Werkzeugmagazins hängt nämlich unmittelbar von der Zykluszeit und der Taktzeit ab. Dabei ist die Anzahl der Werkzeuge n = Zykluszeit / Taktzeit. Für einen effektiven Werkzeugwechsel sollte daher das Werkzeugmagazin mindestens die erwähnten (n+1) Parkpositionen aufweisen.

Eine spezielle Ausgestaltung der Erfindung geht dahin, dass die Fertigungsanlage zwei Roboter aufweist, von denen ein erster Roboter zur Handhabung des aus Unterwerkzeug und Oberwerkzeug bestehenden Werkzeugs und der zweite Roboter zur Aufbringung der Schaumstoffschicht einsetzbar ist. Durch diese Arbeitsteilung der Roboter wird eine optimale Ausnutzung der Fertigungsanlage im Sinne der Erfindung erreicht.

Da der Auftrag der Schaumstoffschicht auf die Formhaut mit aufschäumenden Werkstoffen zu einer Geruchsbeeinträchtigung führen kann, die insbesondere wegen des zuvor bereits erwähnten Isocyanats nicht unproblematisch ist, ist es sinnvoll, diesen Arbeitsgang innerhalb einer Spritzkabine durchzuführen. Dementsprechend geht ein weiterführender Vorschlag der Erfindung dahin, dass der zweite Roboter ebenfalls innerhalb der Spritzkabine angeordnet ist. Somit kann eine hermetische Abriegelung dieses Teils der Fertigungsanlage erreicht und die Beeinträchtigung der in der Umgebung tätigen Bedienpersonen auf ein Mindestmaß reduziert werden. Diese Maßnahme dient damit letztlich der Arbeitssicherheit und dem Schutz der Bedienpersonen und ermöglicht zudem eine vollständige Automatisierung des Spritzprozesses.

Für die Bestückung des Unterwerkzeugs und des Oberwerkzeuges können zwei verschiedene Vorgehensweisen gewählt werden, die darin bestehen, dass die Formhaut manuell oder mittels eines Roboters in das Unterwerkzeug und/oder der Träger manuell oder mittels eines Roboters in das Oberwerkzeug eingesetzt wird. Die Nutzung eines Roboters ermöglicht in diesem Zusammenhang einen Schritt in Richtung Vollautomatisierung.

Zur Verbesserung der Verbindung zwischen Träger, Formhaut und Schaumstoff ist es förderlich, wenn die Werkzeuge auf eine Temperatur oberhalb der Raumtemperatur erhitzt werden, bevor der Schaumstoff in die Formhaut eingespritzt wird. Hierbei hat sich eine elektrische Heizung des Werkzeugs als besonders vorteilhaft herausgestellt, da diese mit verhältnismäßig geringem Energieaufwand und in kurzer Zeit umsetzbar ist und folglich eine zügige Erwärmung des Werkzeugs ermöglicht. Die Taktzeiten zur Herstellung des Bauteils können damit entscheidend reduziert werden.

Eine besonders vorteilhafte Ausführungsvariante der Fertigungsanlage ist darin zu sehen, das die Formhaut und der Träger mittels einer ein Vakuum erzeugenden Pneumatikeinrichtung in der jeweiligen Werkzeughälfte fixiert sind. Durch diese Maßnahme reduziert sich der Aufwand bei der Bestückung der Werkzeughälften auf ein Minimum, weil eine Bedienperson oder ein Roboter den Träger beziehungsweise die Formhaut lediglich an die jeweilige Werkzeughälfte ansetzen muss, während das Vakuum die Formhaut beziehungsweise den Träger selbstständig ansaugt und damit in der im Werkzeug vorhandene Kavität fixiert.

Abgesehen von der zuvor erwähnten Erzeugung eines Vakuums ist es von besonderem Vorteil, wenn die Fertigungsanlage insgesamt elektrisch betreibbar ist. Folglich werden möglichst sämtliche Funktionen mittels elektrischer Leistung ausgeführt, so dass hierbei ein einheitlicher Energieträger zur Verfügung steht und damit die Komplexität der gesamten Fertigungsanlage reduziert werden kann.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.
Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.
Es zeigt:
- Figur 1:: eine schematisch stark vereinfachte Darstellung eines Werkzeugs, wie es in einer Fertigungsanlage nach der Erfindung zum Einsatz kommen kann
und
- Figur 2:: beispielhaft die Darstellung einer Fertigungsanlage mit zwei Robotern.

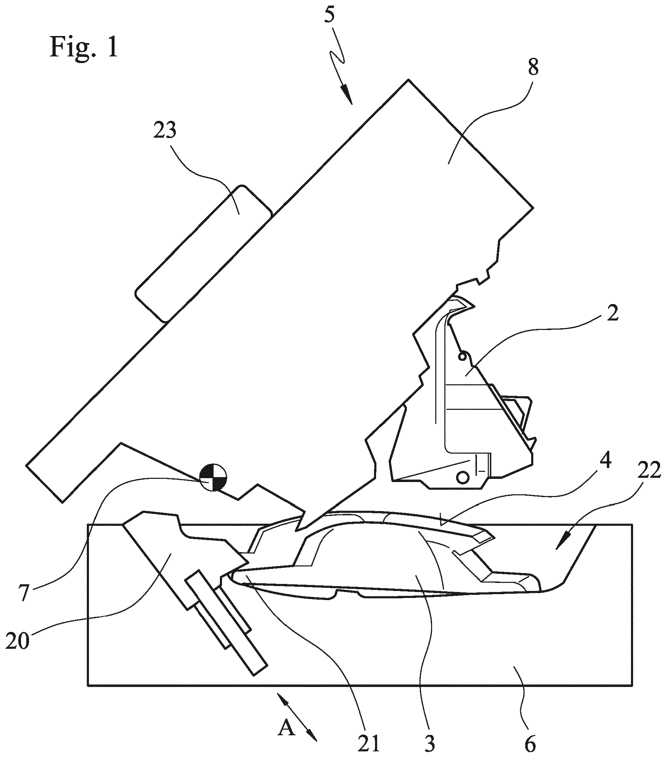

Die Figur 1 zeigt zunächst ein Beispiel für die Möglichkeit der Ausführung eines Werkzeugs 5, von denen in einer Fertigungsanlage nach der Erfindung mehrere zum Einsatz kommen können. Das Werkzeug 5 ist hierbei im wesentlichen zweiteilig aufgebaut und besteht aus einem Unterwerkzeug 6, das mit einem Oberwerkzeug 8 lösbar und um eine Drehachse 7 schwenkbar verbunden ist. Bei der Drehachse 7 handelt es sich im dargestellten Beispiel nicht um eine bauliche Drehachse, sondern um eine virtuelle Drehachse 7. Ein Träger 2 ist hierbei in eine Kavität des Oberwerkzeugs 8 eingesetzt, die zur passgenauen Aufnahme des Trägers 2 dessen Negativform aufweist. Dem Träger 2 gegenüberliegend befindet sich in dem Unterwerkzeug 6 eine Formhaut 3, die ihrerseits passgenau in eine die Negativform der Formhaut aufweisende Kavität 22 eingelegt ist. Auf der dem Träger 2 zugewandten Seite der Formhaut 3 wird auf die Formhaut 3 eine Schaumstoffschicht 4 aus einem ursprünglich flüssigen Schaumwerkstoff aufgebracht, der nach dem Schließen des Werkzeugs 5 durch seine Aushärtung eine stoffschlüssige Verbindung zwischen dem Träger 2 und der Formhaut 3 herstellt. Bei dem in Figur 1 dargestellten Bauteil handelt es sich um das Armaturenbrett für ein Kraftfahrzeug. Da dieses Bauteil einen Hinterschnitt 21 aufweist, wird in dem gezeigten Werkzeug 5 der Einsatz eines Schiebers 20 erforderlich. Der Schieber 20 kann daher innerhalb des Unterwerkzeugs 6 in Richtung des Doppelpfeils A bewegt werden, so dass der Schieber 20 zwischen einer die Formhaut 3 beziehungsweise das fertig gestellte Bauteil fixierenden und einer diese freigebenden Position hin- und herbewegt werden kann. Eine Besonderheit des in Figur 1 dargestellten Werkzeugs 5 besteht darin, dass außenseitig an dem Oberwerkzeug 8 ein Werkzeugflansch 23 angeordnet ist, der das Ergreifen des gesamten Oberwerkzeuges 8 sowie des gesamten, geschlossenen Werkzeugs 5 mit einem Roboterarm ermöglicht, so dass das Werkzeug 5 durch einen Roboter 9 geöffnet und geschlossen sowie insgesamt zwischen verschiedenen Positionen innerhalb der Fertigungsanlage hin- und herbewegt werden kann.

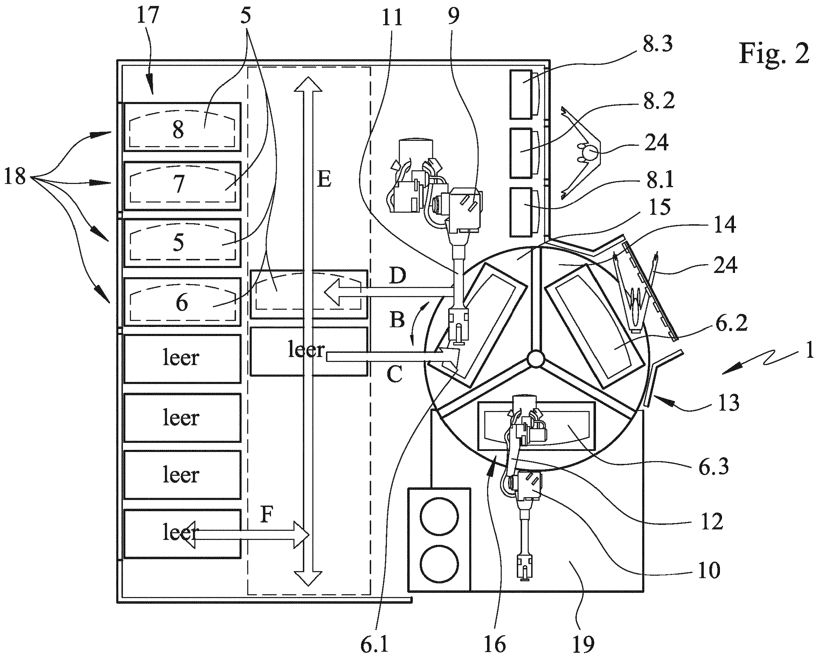

Aus der Figur 2 geht ein Ausführungsbeispiel einer kompletten Fertigungsanlage 1 hervor. Kernstück dieser Fertigungsanlage 1 sind zunächst zwei programmgesteuerte Roboter 9 und 10, die jeweils für verschiedene, automatisierte Aufgaben innerhalb der Fertigungsanlage 1 zum Einsatz kommen. Der Roboter 9 verfügt über einen Roboterarm 11, während der Roboter 10 mit einem Roboterarm 12 ausgestattet ist. Die zentrale Bearbeitungsstation der Fertigungsanlage 1 stellt im vorliegenden Beispiel ein Rundtisch 13 dar, der mit drei unterschiedlichen Positionen ausgestattet ist. Es sind dies eine Bestückungsposition 14, eine Verbindungsposition 15 und eine Spritzposition 16. Wie der Begriff "Rundtisch" bereits klarmacht, ist dieser um eine zentrale Rotationsachse drehbar.
Das Verfahren zur Herstellung eines Bauteiles, das aus einem Träger 2, einer Formhaut 3 und einer zwischen dem Träger 2 und der Formhaut 3 angeordneten Schaumstoffschicht 4 besteht, läuft im vorliegenden Fall so ab, das zunächst durch den Roboter 9 ein Unterwerkzeug 6.1 aus einer Parkposition 18 eines Werkzeugmagazins 17 entnommen und in die Bestückungsposition 14 des Rundtisches 13 überführt wird. Das ausgewählte Unterwerkzeug 6.1 kann dabei zunächst aus der Parkposition 18 des Werkzeugmagazins 17 in Richtung des Pfeils F entnommen und über einen Werkzeugshuttle in Richtung des Pfeils E bewegt werden, so dass es in den Eingriffsbereich des Roboters 9 gelangt. Die Übernahme des Unterwerkzeugs 6.1 durch den Roboter 9 ist in der Figur 2 durch den Pfeil C veranschaulicht. Im Anschluss hieran wird der Rundtisch 13 um 120° im Urzeigersinn gedreht, so dass das Werkzeug 6.1 nunmehr in den Eingriffsbereich einer ersten Bedienperson 24 gelangt, die die Formhaut 3 in das Unterwerkzeug 6.1 einlegt. In dieser Zeit wird durch den Roboter 9 bereits das nächste Werkzeug 6.1 in die Bestückungsposition 14 des Rundtisches 13 befördert, sodass der Prozess kontinuierlich abläuft. Das nunmehr eine Formhaut 3 aufweisende Unterwerkzeug wird zur Unterscheidung mit 6.2 bezeichnet und nachfolgend durch eine erneute Drehung des Rundtisches 13 um 120° in die Spritzposition 16 verbracht, wo innerhalb der nach außen gegen das Entweichen chemischer Dämpfe hermetisch abgeriegelten Spritzkabine 19 durch den zweiten Roboter 10 der flüssige Schaumstoff in die Formhaut 3 eingespritzt wird. Nach einer erneuten Drehung des Rundtisches 13 um 120° im Urzeigersinn befindet sich das zur Unterscheidung nunmehr mit 6.3 bezeichnete Unterwerkzeug in der Verbindungsposition 15, wo es mit einem durch eine zweite Bedienperson 24 zuvor mit einem Träger 2 bestückten Oberwerkzeug 8.1 gekoppelt wird. Nach der Verbindung von Oberwerkzeug 8.1 und Unterwerkzeug 6.3 erfolgt das Schließen des Werkzeugs 5, indem das Oberwerkzeug 8.1 um die virtuelle Drehachse 7 verschwenkt und mittels in der Darstellung der Figur 2 nicht gezeigter Verriegelungselemente in einem geschlossenen Zustand fixiert wird. Als Verriegelungselemente können hierbei Spannmodule zum Einsatz kommen. Diese Tätigkeiten übernimmt im gezeigten Beispiel ebenfalls der Roboter 9, der im Anschluss hieran das geschlossene Werkzeug 5 in Richtung des Pfeils D abgibt, so dass es über den Werkzeugshuttle in Richtung des Pfeils E in eine Parkposition 18 des Werkzeugmagazins 17 überführt werden kann, wo die Schaumstoffschicht 4 aushärtet und damit die stoffschlüssige Verbindung zwischen dem Träger 2 und der Formhaut 3 herstellt. Nach dem Aushärten der Schaumstoffschicht 4 kann das gesamte Werkzeug 5 wieder auf den Rundtisch 13 verbracht werden, um es durch den Roboter 9 zu öffnen, so dass die Entnahme des fertiggestellten Bauteils mittels des Roboters 9 oder durch die Bedienperson 24 möglich wird. Nach einer kurzen Reinigung des Werkzeugs 5 kann dieses im Anschluss hieran unmittelbar für den nächstfolgenden Fertigungsprozess bereitgestellt werden.
Die in der Figur 2 dargestellten Oberwerkzeuge 8.2 und 8.3 können zwischenzeitlich durch die zweite Bedienperson 24 mit Trägern 2 bestückt werden, solange der Fertigungsprozess auf dem Rundtisch 13 abläuft. Dies hat zur Folge, dass die Bedienpersonen 24 nahezu vollständig ausgelastet sind und keine unerwünschten Wartezeiten entstehen.
Wie dies in der Figur 2 ferner angedeutet ist, kann die gesamte Fertigungsanlage 1 innerhalb eines umlaufenden Schutzzaunes untergebracht werden, um somit der erforderlichen Arbeitssicherheit zu entsprechen.

### BEZUGSZEICHENLISTE

- 1: Fertigungsanlage
- 2: Träger
- 3: Formhaut
- 4: Schaumstoffschicht
- 5: Werkzeug
- 6: Unterwerkzeug
- 6.1...6.3: Unterwerkzeuge
- 7: Drehachse
- 8: Oberwerkzeug
- 8,1...8.3: Oberwerkzeuge
- 9: Roboter
- 10: Roboter
- 11: Roboterarm
- 12: Roboterarm
- 13: Rundtisch
- 14: Bestückungsposition
- 15: Verbindungsposition
- 16: Spritzposition
- 17: Werkzeugmagazin
- 18: Parkposition
- 19: Spritzkabine
- 20: Schieber
- 21: Hinterschnitt
- 22: Kavität
- 23: Werkzeugflansch
- 24: Bedienperson

## Patentansprüche

1. Fertigungsanlage (1), geeignet zur Herstellung eines Bauteils mittels einer stoffschlüssigen Verbindung zwischen einem Träger (2), einer Formhaut (3) und einer zwischen Träger (2) und Formhaut (3) angeordneten Schaumstoffschicht (4), die folgende Merkmale aufweist:
- mehrere, im Aufbau gleiche Werkzeuge (5),
- jedes der Werkzeuge (5) besteht aus einem Unterwerkzeug (6) und einem lösbar und/oder um eine Drehachse (7) schwenkbar mit dem Unterwerkzeug (6) verbundenen Oberwerkzeug (8),
- das Oberwerkzeug (8) ist dabei jeweils zur Aufnahme eines Trägers (2) und das Unterwerkzeug (6) zur Einbringung einer Formhaut (3) geeignet, wobei auf die Formhaut (3) eine ursprünglich flüssige, selbstaushärtende Schaumstoffschicht (4) aufgebracht ist und Träger (2), Formhaut (3) und Schaumstoffschicht (4) durch Schließen des Werkzeugs (5) miteinander verbindbar sind,
- jedes Werkzeug (5) ist zum Verschließen mit einer Verriegelungseinrichtung ausgestattet,
- wenigstens ein durch ein Programm gesteuerter Roboter (9, 10) verfügt über mindestens einen Roboterarm (11, 12) zur Bewegung des gesamten Werkzeugs (5),
- ein drehbarer Rundtisch (13) ist durch den Roboter (9, 10) in einer Bestückungsposition (14) mit einem mit der Formhaut (3) ausgestatteten Unterwerkzeug (6) bestückbar,
- eine Spritzposition (16) des Rundtisches (13), zum Auftrag der Schaumstoffschicht (4) auf die Formhaut (3),
- das Unterwerkzeug (6) ist in einer Verbindungsposition (15) des Rundtisches (13) mit einem den Träger (2) enthaltenden Oberwerkzeug (8) verbind- und verschließbar,
- das gesamte, durch den Roboter (9, 10) geschlossene Werkzeug (5) ist wechselnd zwischen dem Rundtisch (13) und einer Parkposition (14) bewegbar, wozu außenseitig an dem Oberwerkzeug (8) ein Werkzeugflansch (23) angeordnet ist.

2. Fertigungsanlage nach Anspruch 1,
**dadurch gekennzeichnet, dass** der Rundtisch (13) lediglich zwei oder drei Bearbeitungspositionen (14, 15, 16) aufweist.

3. Fertigungsanlage nach einem der vorstehend genannten Ansprüche,
**dadurch gekennzeichnet, dass**
innerhalb eines Werkzeugmagazins (17) der Fertigungsanlage (1) mehrere Parkpositionen (18) vorhanden sind.

4. Fertigungsanlage nach Anspruch 3,
**dadurch gekennzeichnet, dass**
mindestens eine der Parkpositionen (18) für einen Werkzeugwechsel nutzbar ist.

5. Fertigungsanlage nach einem der vorstehend genannten Ansprüche,
**dadurch gekennzeichnet, dass**
die Fertigungsanlage (1) zwei Roboter (9, 10) aufweist, von denen ein erster Roboter (9) zur Handhabung des aus Unterwerkzeug (6) und Oberwerkzeug (8) bestehenden Werkzeugs (5) und der zweite Roboter (10) zur Aufbringung der Schaumstoffschicht (4) einsetzbar ist.

6. Fertigungsanlage nach Anspruch 5,
**dadurch gekennzeichnet, dass**
der zweite Roboter (10) innerhalb einer Spritzkabine (19) angeordnet ist.

7. Fertigungsanlage nach einem der vorstehend genannten Ansprüche,
**dadurch gekennzeichnet, dass**
ein zum Einsetzen der Formhaut (3) in das Unterwerkzeug (6) und/oder des Trägers (2) in das Oberwerkzeug (8) konfigurierter Roboter vorhanden ist.

8. Fertigungsanlage nach einem der vorstehend genannten Ansprüche,
**dadurch gekennzeichnet, dass**
die Werkzeuge (5) elektrisch beheizbar sind.

9. Fertigungsanlage nach einem der vorstehend genannten Ansprüche,
**dadurch gekennzeichnet, dass**
eine ein Vakuum erzeugende Pneumatikeinrichtung in der jeweiligen Werkzeughälfte (6, 8) zur Fixierung der Formhaut (3) und des Trägers (2) vorhanden ist.

10. Fertigungsanlage nach einem der vorstehend genannten Ansprüche,
**dadurch gekennzeichnet, dass**
die Fertigungsanlage (1) insgesamt elektrisch betreibbar ist.

## Claims

1. Production facility (1) suitable for producing a component by means of a material-locking connection between a carrier (2), a moulded skin (3) and a foam layer (4) arranged between carrier (2) and moulded skin (3), which has the following features:
- a plurality of identically-designed tools (5);
- each of the tools (5) consists of a lower tool (6) and an upper tool (8) connected releasably and/or pivotably about an axis of rotation (7) to the lower tool (6);
- the upper tool (8) is in each case suitable for receiving a support (2) and the lower tool (6) for introducing a moulded skin (3), wherein on the moulded skin (3) an originally liquid, self-curing foam layer (4) is applied and carrier (2), moulded skin (3) and foam layer (4) can be connected to each other by closing the tool (5);
- each tool (5) is equipped with a locking device for locking;
- at least one robot (9, 10) controlled by a program has at least one robot arm (11, 12) for moving the entire tool (5);
- a rotatable rotary table (13) can be equipped by the robot (9, 10) in a loading position (14) with a lower tool (6) fitted with the moulded skin (3);
- an injection position (16) of the rotary table (13) for applying the foam layer (4) to the moulded skin (3);
- in a connecting position (15) of the rotary table (13) the lower tool (6) is connectable and closable with a carrier (2) containing the upper tool (8);
- the entire tool (5) closed by the robot (9, 10) is movable alternately between the rotary table (13) and a parking position (14), to which end a tool flange (23) is arranged externally on the upper tool (8).

2. Production facility according to claim 1,
**characterised in that** the rotary table (13) has only two or three processing positions (14, 15, 16).

3. Production facility according to any one of the preceding claims, **characterised in that** within a tool magazine (17) of the production facility (1) a plurality of parking positions (18) are present.

4. Production facility according to claim 3,
**characterised in that** at least one of the parking positions (18) is usable for a tool change.

5. Production facility according to any one of the preceding claims, **characterised in that** the production facility (1) comprises two robots (9, 10), of which a first robot (9) can be used for handling the tool (5) consisting of lower tool (6) and upper tool (8) and the second robot (10) for applying the foam layer (4).

6. Production facility according to claim 5,
**characterised in that** the second robot (10) is arranged within a spray booth (19).

7. Production facility according to any one of the preceding claims, **characterised in that** a robot configured for inserting the moulded skin (3) in the lower tool (6) and/or the carrier (2) is present.

8. Production facility according to any one of the preceding claims, **characterised in that** the tools (5) are electrically heatable.

9. Production facility according to any one of the preceding claims, **characterised in that** a pneumatic device generating a vacuum is present in the respective tool half (6, 8) for fixing the moulded skin (3) and the carrier (2).

10. Production facility according to any one of the preceding claims, **characterised in that** the production facility (1) can be fully electrically operated.

## Revendications

1. Installation de production (1), appropriée pour la fabrication d'un composant au moyen d'un raccordement par liaison de matière entre un support (2), une peau moulée (3) et une couche de mousse (4) disposée entre le support (2) et la peau moulée (3), qui présente les caractéristiques suivantes :
- plusieurs outils (5) de structure identique,
- chacun des outils (5) se compose d'un outil inférieur (6) et d'un outil supérieur (8) raccordé à l'outil inférieur (6) de façon détachable et/ou de façon pivotante autour d'un axe de rotation (7),
- respectivement, en l'occurrence, l'outil supérieur (8) est approprié pour la réception d'un support (2), et l'outil inférieur (6) pour l'introduction d'une peau moulée (3), une couche de mousse (4) auto-durcissante, initialement liquide, étant appliquée sur la peau moulée (3), et le support (2), la peau moulée (3) et la couche de mousse (4) pouvant être raccordés entre eux par la fermeture de l'outil (5),
- chaque outil (5) est équipé d'un équipement de verrouillage pour la fermeture,
- au moins un robot (9, 10) commandé par un programme dispose d'au moins un bras de robot (11, 12) pour le déplacement de la totalité de l'outil (5),
- une table ronde (13) rotative peut, dans une position d'équipement (14), être équipée par le robot (9, 10) d'un outil inférieur (6) muni de la peau moulée (3),
- une position de pulvérisation (16) de la table ronde (13), pour l'application de la couche de mousse (4) sur la peau moulée (3),
- dans une position de raccordement (15) de la table ronde (13), l'outil inférieur (6) peut être raccordé à un outil supérieur (8) contenant le support (2) et être fermé,
- la totalité de l'outil (5) fermé par le robot (9, 10) peut être déplacée de façon alternée entre la table ronde (13) et une position de stationnement (14), une bride d'outil (23) étant disposée pour cela sur l'outil supérieur (8), du côté extérieur.

2. Installation de production selon la revendication 1,
**caractérisée en ce que** la table ronde (13) ne comporte que deux ou trois positions d'usinage (14, 15, 16).

3. Installation de production selon l'une des revendications citées précédemment,
**caractérisée**
**par** la présence de plusieurs positions de stationnement (18)
à l'intérieur d'un magasin d'outils (17) de l'installation de production (1).

4. Installation de production selon la revendication 3,
**caractérisée en ce**
**qu'**au moins une des positions de stationnement (18) peut être utilisée pour un changement d'outil.

5. Installation de production selon l'une des revendications citées précédemment,
**caractérisée en ce que**
l'installation de production (1) comporte deux robots (9, 10) dont un premier robot (9) peut être utilisé pour la manipulation de l'outil (5) composé de l'outil inférieur (6) et de l'outil supérieur (8), et le deuxième robot (10) peut être utilisé pour l'application de la couche de mousse (4).

6. Installation de production selon la revendication 5,
**caractérisée en ce que**
le deuxième robot (10) est disposé à l'intérieur d'une cabine de pulvérisation (19).

7. Installation de production selon l'une des revendications citées précédemment,
**caractérisée**
**par** la présence d'un robot configuré pour l'insertion de la peau moulée (3) dans l'outil inférieur (6) et/ou du support (2) dans l'outil supérieur (8).

8. Installation de production selon l'une des revendications citées précédemment,
**caractérisée en ce que**
les outils (5) peuvent être chauffés électriquement.

9. Installation de production selon l'une des revendications citées précédemment,
**caractérisée**
**par** la présence d'un équipement pneumatique produisant du vide dans la moitié d'outil (6, 8) respective pour la fixation de la peau moulée (3) et du support (2).

10. Installation de production selon l'une des revendications citées précédemment,
**caractérisée en ce que**
l'installation de production (1) peut être opérée entièrement de façon électrique.
